# DEMANDE DE BREVET EUROPEEN

(11) **EP 4 368 538 A1**
(43) Date de publication de la demande: **15.05.2024**
(21) Numéro de dépôt: 23208841.9
(22) Date de dépôt: 09.11.2023
(51) Int. Cl.: B65F 1/10, C05F 17/907, B65F 1/14, B65F 1/16, C05F 17/964

(54) **RÉCIPIENT DE COLLECTE DE DÉCHETS ORGANIQUES, POUR LA PRODUCTION MÉNAGÈRE DE COMPOST**

(30) Priorité: 10.11.2022 FR 2211718
(71) Demandeur: Jensen Industrial Ltd, Hong Kong (HK)
(72) Inventeur: MARRIE, Lionel, 33470 GUJAN MESTRAS (FR)
(74) Mandataire: Vuillermoz, Bruno

(57) **Abrégé**

L'invention concerne un récipient (1) de collecte de déchets organiques, pour la fabrication ménagère de compost, ce récipient comprenant un corps (2) et un couvercle (3). Selon l'invention :
- le corps (2) présente une fente (5) traversant la paroi latérale de ce corps au niveau d'un premier côté latéral (2a), aménagée en retrait de l'extrémité supérieure du corps (2) ;
- le corps (2) présente des éléments (10) formant une glissière au niveau de la fente (5) ;
- le récipient comprend une plaque coulissante (6) engagée au travers de la fente (5) et dans la glissière, pour fermer ou ouvrir le corps (2) du récipient ; la plaque (6) comprend un moyen de manoeuvre (6a), permettant à un utilisateur d'opérer la manoeuvre manuelle de cette plaque depuis l'extérieur du corps (2) du récipient.

## Description

La présente invention concerne un récipient de collecte de déchets organiques, pour la fabrication ménagère de compost.

Pour beaucoup de personnes, il est de plus en plus désirable de valoriser directement ses déchets organiques en produisant du compost à domicile ; cette production implique cependant l'existence d'odeurs fortes, qu'une poubelle classique, à corps de réception des déchets et à couvercle, ne permet pas d'éviter, les odeurs s'échappant notamment lorsque le couvercle est ouvert pour déposer de nouveaux déchets dans le corps de récipient.

Le document DE19647932A1 décrit un récipient de collecte de déchets organiques selon le préambule de la revendication 1. Le récipient selon ce document antérieur, destiné à être placé dans une rue ou une collectivité, et ayant une structure complexe, ne permet pas d'atteindre le but mentionné ci-dessus.

La présente invention a pour objectif de remédier à cet inconvénient essentiel, en fournissant un récipient à la fois simple à fabriquer, donc à un coût modéré, et simple et facile à utiliser.

Le récipient concerné comprend, de manière connue en soi, les caractéristiques mentionnées dans le préambule de la revendication 1 annexée.

L'invention est définie par la partie caractérisante de la revendication 1 annexée. Les autres revendication définissent des modes de réalisation possible de l'invention.

En pratique, la plaque est normalement placée dans sa position de coulissement dans laquelle elle est située le plus à l'intérieur du corps de récipient, également dénommée ci-après "position de fermeture du corps de récipient" ; dans cette position, elle isole l'intérieur du corps de récipient vis-à-vis de l'extérieur et permet une isolation venant en supplément de cette réalisée par le couvercle du récipient. Cette double isolation permet d'empêcher, ou tout au moins de réduire très fortement, l'échappement d'odeurs à l'extérieur du récipient.

Un utilisateur, lorsqu'il veut déposer de nouveaux déchets dans le corps du récipient, ouvre le couvercle du récipient, dépose ces nouveaux déchets sur la plaque, referme le couvercle et manoeuvre la plaque vers une position dans laquelle cette plaque est située totalement ou partiellement à l'extérieur du corps de récipient, cette position étant également dénommée ci-après "position d'ouverture du corps de récipient". Cette manoeuvre permet de faire tomber les déchets à l'intérieur du corps de récipient alors que le couvercle est fermé ; une fois cette opération réalisée, l'utilisateur ramène la plaque dans la position de fermeture du corps de récipient.

Il se comprend que, grâce à l'invention, la plaque permet de former un sas de dépôt des déchets à l'intérieur du récipient ; un tel dépôt ne conduit donc à aucun moment d'ouvrir sur l'extérieur la partie du corps de récipient qui contient les déchets, ce qui empêche la diffusion d'odeurs dans l'habitation de l'utilisateur, et/ou empêche que des insectes susceptibles de d'être développés dans le compost ne se répandent dans l'habitation de l'utilisateur.

Il serait concevable que ledit moyen de manoeuvre de la plaque soit constitué par un ou plusieurs organes de manoeuvre différents de la structure de la plaque, par exemple par une poignée reliée à la plaque ; il en résulterait cependant l'inconvénient d'une complexification de la structure du récipient et d'une augmentation corrélative du coût de fabrication de celui-ci ; par conséquent, de préférence, la plaque est dimensionnée de manière à former , dans la position de coulissement la plus à l'intérieur du corps du récipient, une extension de cette plaque faisant saillie au-delà de la fente, cette extension formant une partie apte à être saisie par l'utilisateur pour la manoeuvre de la plaque, et constituant donc le moyen de manoeuvre précité.

De préférence, le corps de récipient comprend, à l'intérieur de lui-même, sur ledit premier côté latéral, des moyens de raclage de la surface supérieure de la plaque, notamment sous la forme d'une lèvre souple.

Par cette disposition, la face supérieure de la plaque est nettoyée d'éventuels restes de déchets ou d'éventuelles coulures qui pourraient être déposées sur cette face supérieure par les déchets.

De préférence, la plaque comprend, le long de son bord interne, c'est-à-dire situé le plus à l'intérieur du corps de récipient, une partie en saillie, faisant saillie du côté de la plaque opposé à celui destiné à recevoir des déchets.

Cette partie en saillie constitue un moyen d'arrêt du coulissement de la plaque en position la plus à l'extérieur du corps de récipient, évitant le risque de désengagement de cette plaque par rapport à ce corps.

Avantageusement, dans ce cas, ladite partie en saillie est formée par une pièce longitudinale rapportée sur ledit bord interne, qui est recourbée en direction du bord externe de la plaque opposé à ce bord interne de façon à former un élément de crochetage apte à venir en engagement sur le bord du corps de récipient qui délimite la partie inférieure de la fente lorsque la plaque est dans sa position de coulissement la plus extérieure par rapport au corps de récipient.

Cette pièce permet ainsi d'accrocher la plaque au corps de récipient, dans une position dans laquelle la plaque est rabattue contre ce corps. Le récipient a ainsi un encombrement réduit en position de pleine ouverture, notamment pour ne pas gêner la collecte du compost, le nettoyage de l'intérieur du récipient ou la mise en place d'un sac de réception des déchets.

Cette pièce longitudinale peut notamment présenter une forme arrondie en section transversale et être réalisée en matériau semi-souple, c'est-à-dire présentant une rigidité lui permettant d'assurer le crochetage précité, mais présentant une souplesse lui permettant, en fin de course de la plaque vers l'intérieur du corps de récipient, d'amortir le mouvement de cette plaque, et lui permettant d'être appliquée contre la paroi du corps de récipient, à la manière d'un joint d'étanchéité.

La plaque peut notamment être en un matériau transparent afin de permettre de visualiser le niveau des déchets à l'intérieur du corps de récipient.

L'invention sera bien comprise, et d'autres caractéristiques et avantages de celle-ci apparaîtront, en référence au dessin schématique annexé montrant une forme de réalisation possible du récipient concerné.
[Fig. 1] La figure 1 en est une vue en perspective, dans une position d'une plaque coulissante que comprend ce récipient réalisant une fermeture du corps du récipient ;
[Fig. 2] la figure 2 en est une vue similaire à la figure 1, dans une position de d'ouverture partielle du corps du récipient ;
[Fig. 3] la figure 3 est une vue en est une vue similaire à la figure 1, dans une position de pleine ouverture du corps du récipient ; et
[Fig. 4] la figure 4 est une vue partielle du récipient, en perspective, à échelle agrandie, et en coupe longitudinale médiane, ladite plaque étant dans une position de fermeture du corps du récipient.

Les figures représentent un récipient 1 de collecte de déchets organiques, pour la fabrication ménagère de compost, comprenant un corps 2 de réception de déchets et un couvercle supérieur 3.

Le récipient 1 présente globalement des dimensions faisant qu'il est assimilable à une poubelle ménagère.

Dans l'exemple représenté, la paroi latérale du corps 2 présente une section horizontale de forme sensiblement carrée, de sorte que ce corps présente quatre côtés latéraux.

Le couvercle 3 assure une fermeture aussi hermétique que possible du corps 2 ; il peut être indépendant du corps 2 ou être relié à ce corps par une charnière, et peut être à manipulation simplement manuelle, ou à manipulation au moyen une pédale, selon des techniques bien connues en elles-mêmes et ne faisant pas particulièrement partie de l'invention, donc n'étant pas détaillées ici.

Comme cela est visible, le corps 2 présente une fente 5 traversant sa paroi latérale au niveau d'un premier côté latéral avant 2a de ce corps 2. Cette fente 5 est aménagée du côté de l'extrémité supérieure du corps 2 et en retrait de cette extrémité, ce retrait étant suffisant pour former entre la surface supérieure d'une plaque coulissante 6 décrite ci-après et la surface inférieure du couvercle 3, un compartiment 7 de réception de nouveaux déchets, ainsi que cela apparaîtra plus loin.

Le corps 2 présente intérieurement des éléments 10 formant glissière, qui présentent des rainures pour le glissement de la plaque 6, placées au même niveau que la fente 5? Ces éléments 10 sont placés sur des deuxièmes côtés latéraux 2b du corps 2 consécutifs au premier côté 2a, de part et d'autre de celui-ci. Chacun de ces éléments 10 est formé par un profilé constitué en une seule pièce de matière synthétique, cette pièce formant, sur un côté latéral d'elle-même, la rainure précitée, et, sur un côté latéral opposé, une surface de fixation de l'élément 10 au corps de récipient 2. Cette fixation peut se faire par tous moyens appropriés, notamment par collage ou soudage.

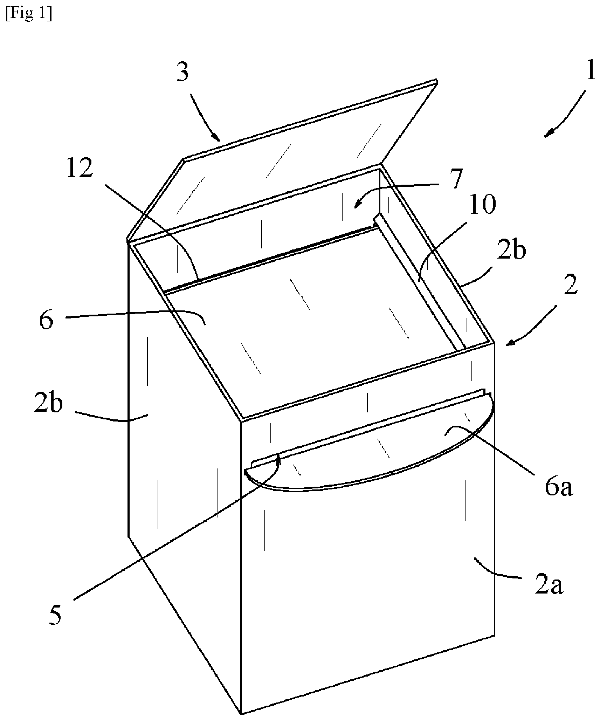

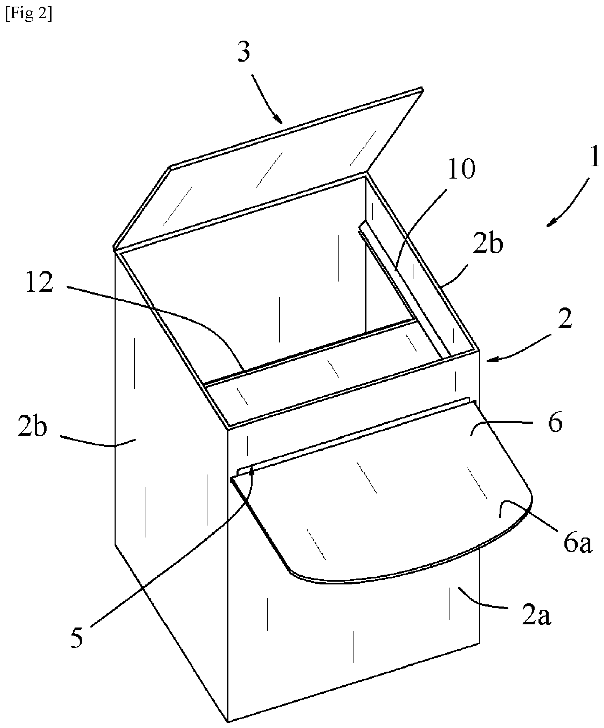

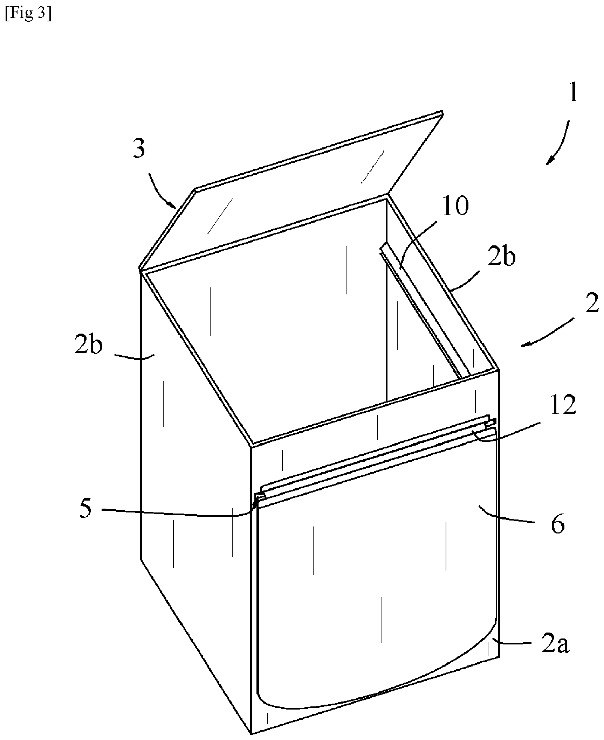

La plaque 6 est engagée de façon coulissante au travers de la fente 5 et dans la glissière que forment conjointement les éléments 10 ; comme cela est visible, la plaque 6 est dimensionnée de façon à, dans sa position de coulissement la plus à l'intérieur du corps 2 visible sur la figure 1, occuper toute la section transversale de ce corps, et donc séparer entièrement l'intérieur du corps 2 vis-à-vis de l'extérieur du récipient 1. Dans une position de coulissement vers l'extérieur du corps 2, que ce coulissement soit partiel (figure 2) ou total (figure 3), la plaque permet de libérer plus ou moins l'accès à l'intérieur du corps 2.

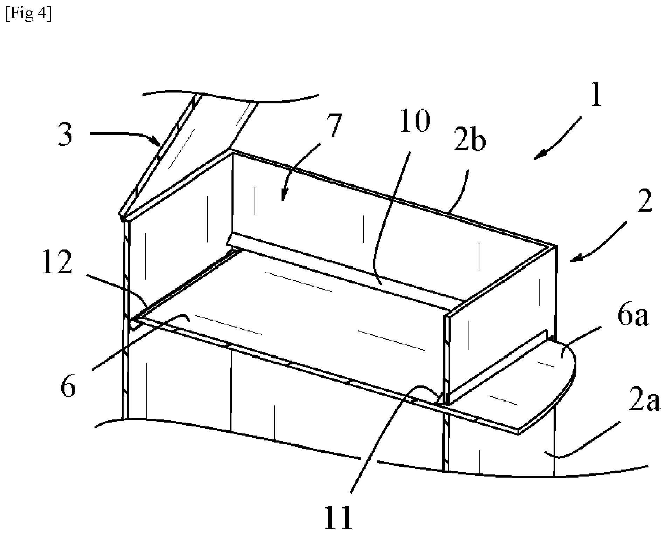

Il apparaît également que la plaque 6 est dimensionnée de manière à former une extension 6a de cette plaque faisant saillie au-delà de la fente 5 dans la position de coulissement de la plaque la plus à l'intérieur du corps 2, comme visible sur les figures 1 et 4. Cette extension 6a forme ainsi une partie apte à être saisie manuellement par l'utilisateur pour la manoeuvre de la plaque 6.

En référence à la figure 4, il apparaît que le corps 2 comprend, à l'intérieur de lui-même, sur ledit premier côté 2a comprenant la fente 5, une lèvre souple 11 de raclage de la surface supérieure de la plaque 6, notamment réalisée en une matière synthétique.

Il apparaît également sur cette figure 4 que la plaque comprend, le long de son bord interne au corps 2 de récipient, une pièce allongée 12 rapportée sur ce bord, qui est recourbée en direction du bord opposé de la plaque 6 de façon à former un élément de crochetage. Cette pièce 12 présente une forme arrondie en section transversale et est réalisée en un matériau semi-souple. La forme de cette pièce 12 et la relative rigidité de cette pièce 12 permet à cette pièce de constituer un élément de crochetage apte, comme cela est visible sur la figure 3, à venir en engagement sur le bord du corps 2 qui délimite la partie inférieure de la fente 5, lorsque la plaque 6 est dans sa position de pleine ouverture du corps 2 ; la forme de cette pièce 12 et la relative souplesse de cette pièce permet à cette pièce, en fin de course de la plaque 6 vers l'intérieur du corps 2, d'amortir le mouvement de cette plaque et d'être appliquée contre la paroi du corps 2, constituant ainsi un joint d'étanchéité qui assure l'isolation de l'intérieur du corps 2 par rapport à l'extérieur du récipient 1.

En pratique, la plaque 6 est normalement placée dans sa position de fermeture du corps 2, visible sur la figure 1 ; dans cette position, elle isole l'intérieur du corps 2 vis-à-vis de l'extérieur en supplément de l'isolation réalisée par le couvercle 3. L'ajustement de la fente 5 et des rainures des éléments 10 à l'épaisseur de la plaque 6, ainsi que la présence de la lèvre 11 et de la pièce 12, permet une isolation parfaite de l'intérieur du corps 2 vis-à-vis de l'extérieur, et permet donc d'éliminer l'échappement d'odeurs vers l'extérieur de ce corps.

Un utilisateur, lorsqu'il veut déposer de nouveaux déchets dans le corps 2 du récipient, ouvre le couvercle 3, dépose ces nouveaux déchets sur la plaque 6, referme le couvercle 3 et manoeuvre la plaque 6 vers la position d'ouverture totale ou partielle du corps 2, ce qui permet de faire tomber les déchets à l'intérieur de ce corps, ceci alors que le couvercle 3 est fermé ; une fois cette opération réalisée, l'utilisateur ramène la plaque 6 dans la position de fermeture.

Au cours du coulissement de la plaque 6 dans la direction de l'ouverture du corps 2, la lèvre 11 permet de nettoyer la face supérieure de cette plaque, pour le cas d'éventuels restes de déchets sur cette face ou d'éventuelles coulures produites par ces déchets.

L'invention fournit ainsi un récipient 1 de collecte de déchets organiques, pour la fabrication ménagère de compost, qui a pour avantage déterminant d'être à la fois simple à fabriquer, donc à un coût modéré, et d'être simple et facile à utiliser.

Il va de soi que l'invention ne se limite pas à la forme de réalisation particulière décrite en référence aux dessins à titre d'exemple ; ainsi, ladite partie en saillie 12 pourrait être un simple crochet permettant l'accrochage de la plaque 6 au corps 2 de récipient en position de pleine ouverture de ce corps.

## Revendications

1. Récipient (1) de collecte de déchets organiques, pour la fabrication ménagère de compost, comprenant un corps (2) formant réceptacle à déchets et un couvercle (3) de fermeture de ce corps ;
le corps (2) du récipient présente une fente (5) traversant la paroi latérale de ce corps au niveau d'un premier côté latéral (2a) de ce corps ;
une plaque coulissante (6) est engagée de façon coulissante au travers de la fente (5) ;
**caractérisé en ce que** :
- le récipient (1) présente globalement des dimensions faisant qu'il est assimilable à une poubelle ménagère ;
- le couvercle (3) est un couvercle supérieur de ce récipient ;
- la fente (5) est aménagée du côté de l'extrémité supérieure du corps (2) et en retrait de cette extrémité, ce retrait étant suffisant pour former entre la surface supérieure de la plaque coulissante (6) et la surface inférieure du couvercle (3), un compartiment (7) de réception de nouveaux déchets ;
- le corps (2) du récipient présente des éléments internes (10) formant conjointement une glissière, qui sont placés au niveau de la fente (5), sur des deuxièmes côtés latéraux (2b) du corps (2) consécutifs au premier côté (2a) ;
- ladite plaque coulissante (6) est engagée de façon coulissante au travers de la fente (5) et dans les éléments (10) formant glissière, cette plaque (6) étant dimensionnée de façon à, dans une position de coulissement la plus à l'intérieur du corps (2) du récipient, occuper toute la section transversale de ce corps (2), et donc permettant de séparer entièrement l'intérieur du corps de récipient vis-à-vis de l'extérieur du récipient (1), et, dans une position de coulissement vers l'extérieur du corps (2) de récipient, libérer l'accès à l'intérieur de ce corps ; la plaque (6) comprend un moyen de manoeuvre (6a), pour opérer la manoeuvre manuelle de cette plaque depuis l'extérieur du corps (2) du récipient.

2. Récipient (1) selon la revendication 1, **caractérisé en ce que** la plaque (6) est dimensionnée de manière à former, dans ladite position de coulissement la plus à l'intérieur du corps (2) de récipient, une extension (6a) de cette plaque (6) faisant saillie au-delà de la fente (5), cette extension (6a) formant une partie apte à être saisie par un utilisateur pour la manoeuvre de la plaque (6), et constituant donc le moyen de manoeuvre précité.

3. Récipient (1) selon la revendication 1 ou la revendication 2, **caractérisé en ce que** le corps (2) de récipient comprend, à l'intérieur de lui-même, sur ledit premier côté latéral (2a), des moyens de raclage de la surface supérieure de la plaque (6), notamment sous la forme d'une lèvre souple (11).

4. Récipient (1) selon l'une des revendications 1 à 3, **caractérisé en ce que** la plaque (6) comprend, le long de son bord interne, c'est-à-dire situé le plus à l'intérieur du corps (2) de récipient, une partie en saillie (12), faisant saillie du côté de la plaque (6) opposé au côté de cette plaque destiné à recevoir des déchets.

5. Récipient (1) selon la revendication 4, **caractérisé en ce que** ladite partie en saillie est formée par une pièce longitudinale (12) rapportée sur ledit bord interne, qui est recourbée en direction du bord externe de la plaque (2) opposé à ce bord interne, de façon à former un élément de crochetage apte à venir en engagement sur le bord du corps (2) de récipient qui délimite la partie inférieure de la fente (5) lorsque la plaque (6) est dans sa position de coulissement la plus extérieure par rapport au corps (2) de récipient.

6. Récipient (1) selon la revendication 5, **caractérisé en ce que** la pièce longitudinale (12) présente une forme arrondie en section transversale et est réalisée en matériau semi-souple, c'est-à-dire présentant une rigidité lui permettant d'assurer le crochetage précité, mais présentant une souplesse lui permettant, en fin de course de la plaque (6) vers l'intérieur du corps (2) de récipient, d'amortir le mouvement de cette plaque (6), et lui permettant d'être appliquée contre la paroi du corps (2) de récipient à la manière d'un joint d'étanchéité.

7. Récipient (1) selon l'une des revendications 1 à 5, **caractérisé en ce que** la plaque (6) est en un matériau transparent.
